# FASCICULE DE BREVET EUROPEEN

(11) **EP 1 647 422 B1**
(45) Date de publication et mention de la délivrance du brevet: **25.05.2011**
(21) Numéro de dépôt: 05292089.9
(22) Date de dépôt: 07.10.2005
(51) Int. Cl.: B60C 23/04

(54) **Montage de fixation sur une jante d'un boîtier de détection notamment de la pression du pneumatique**
Befestigungsmontage eines Sensors auf einer Felge, insbesondere eines Luftdrucksensors
Fixation mounting of a sensor on a rim, especially of a pressure sensor

(30) Priorité: 12.10.2004 FR 0410767
(43) Date de publication de la demande: 19.04.2006
(73) Titulaire: LDL Technology, 31100 Toulouse (FR)
(72) Inventeur: Luce, Dominique, 31210 Bordes de Rivière (FR)
(74) Mandataire: de Kernier, Gabriel

(56) Documents cités:
- US-A- 6 055 855
- PATENT ABSTRACTS OF JAPAN vol. 2003, no. 09, 3 septembre 2003 (2003-09-03) & JP 2003 146035 A (BRIDGESTONE CORP), 21 mai 2003 (2003-05-21)

## Description

La présente invention a trait au domaine de la détection de paramètres tels la pression ou la température à l'intérieur d'un pneumatique et plus particulièrement aux adaptations permettant de réaliser dans les meilleures conditions la fixation du boîtier de détection à la jante de la roue.

Il existe dans l'art antérieur plusieurs solutions de fixation du boîtier de détection. Parmi ces solutions, celle adoptée par l'invention consiste à fixer à l'intérieur de la jante, ledit boîtier de détection, qui contient les capteurs correspondant aux paramètres à surveiller, au corps de la valve de gonflage du pneumatique.

La demanderesse a constaté que les mises en oeuvre connues dans l'art antérieur de cette solution de fixation présentaient des inconvénients qui sont développés ci-dessous.

Les documents américains n° US 6,055,855 et n° US 5,844,131 proposent de mettre en oeuvre la fixation d'un boîtier de détection à l'intérieur d'un pneumatique au moyen du corps de valve en présentant un montage de fixation où ledit corps est préformé à une première extrémité pour accueillir de manière articulée le boîtier et à sa deuxième extrémité pour autoriser le vissage d'un écrou de serrage. Le corps de valve est également préformé sur sa partie intérieure, d'un épaulement sur lequel vient se placer un joint élastomère de sorte que l'action de serrage de l'écrou venant en appui sur la surface extérieure de la jante, assure le rapprochement de l'épaulement vers la surface intérieure de la jante, rapprochement venant ainsi serrer le joint élastomère contre ladite surface. Le joint élastomère est préformé pour pénétrer dans l'orifice réalisé dans la jante pour autoriser la fixation de la valve et s'intercaler dans cet orifice entre le corps de valve et la jante. L'action de serrage assure également le plaquage dudit boîtier contre la surface intérieure de la valve.

Cette mise en oeuvre présente plusieurs inconvénients relevés par la demanderesse parmi lesquels :
- Lorsque la roue tourne à haute vitesse, le corps de valve est soumis à de très fortes contraintes qui se reportent sur le joint placé entre le corps et la jante. Or, un élément élastomère d'étanchéité qui n'a pas pour fonction de supporter de tels efforts voit sa durée de vie considérablement diminuée et devient une cause de perte de pression et de panne.
- Le joint est plaqué contre la surface intérieure de la jante qui présente dans la plupart des cas une planéité de surface susceptible d'endommager le joint et/ou de diminuer sa capacité d'étanchéité.
- Le joint faisant intégralement partie du montage de fixation, l'effort de serrage doit être adapté et ne pas dépasser une valeur seuil au delà de laquelle, le joint serait endommagé. Or, ce serrage contrôlé n'est pas toujours respecté.
- De plus, dans la mesure où l'effort de serrage est réalisé selon les prescriptions, la présence de l'écrou de serrage à l'extérieur rend très facile un dévissage malintentionné.
- En étant soumis à la fois à la pression de serrage, aux efforts tangentiels dus à la rotation la roue, à la pression et à la température du pneumatique, le joint est soumis à un phénomène de fluage dilatant sa partie intérieure et comprimant sa partie venant s'intercaler entre la surface cylindrique de la valve et la surface cylindrique de l'orifice pratiqué dans la jante pour accueillir ladite valve.
- En plaquant le boîtier contre la jante, ce dernier est soumis à la température de la jante.
- Un tel montage est adapté à une fixation sur jante de roue de voiture où la valve n'est pas présente dans le plan de symétrie de la jante.

Une évolution est décrite dans le document français n° FR2834245 qui, sur la base du même principe de fixation, a pour avantage de proposer un corps de valve avec un épaulement intérieur contre lequel vient se positionner le joint élastomère d'étanchéité préformé de façon à former une butée mécanique contrecarrant l'effort de serrage de l'écrou extérieur de sorte que l'effort de serrage exercé contre le joint ne dépasse pas la valeur seuil au-delà de laquelle il sera endommagé. Bien que ce montage propose une solution à un des problèmes de l'art antérieur, il conserve les autres inconvénients ci-dessus décrits.

En outre, un autre inconvénient rencontré dans l'art antérieur concerne le boîtier lui-même qui, pour des raisons d'étanchéité et de maintien en position des composants qu'il accueille, est classiquement rempli d'une matière plastique qui grève le poids du boîtier et rend son recyclage impossible. Les vitesses et accélérations auxquelles est soumis le boîtier font que toute masse additionnelle devient une contrainte supplémentaire reportée sur le montage de fixation du boîtier sur la valve et, en conséquence dans les solutions de l'art antérieur, sur le joint.

Le document JP-A-200314035 divulgue un montage de boîtier de détection à l'intérieur d'un pneumatique avec fixation sur un corps de valve et comprenant les éléments suivants :
- un boîtier de détection accueillant des composants de détection,
- un corps de valve,
- un moyen d'étanchéité de type joint,
- un moyen de maintien en position du corps de valve sur la jante, la jante présentant un orifice de liaison prévu à cet effet,
- un module de liaison du boîtier de détection avec le corps de valve. Les moyens d'étanchéité proposés par ce document constituent des joints qui sont à la fois en contact avec la totalité de la surface cylindrique du trou traversant la jante. Ainsi, ce document propose une solution de fixation présentant les inconvénients cités ci-dessus en ce que la pièce qui forme le joint est soumise à la totalité des contraintes tangentielles et radiales.

Le document DE-A-3930095 décrit un montage d'un boîtier de détection où le corps de valve est remplacé par une excroissance du boîtier qui vient en appui sur la surface intérieure de la jante. Le joint assure l'étanchéité entre ledit boîtier et la jante et n'est pas serré entre l'orifice et ladite excroissance du boîtier se substituant au corps de valve. En outre, le moyen de maintien en position de cette excroissance se trouve disposé à l'extérieur de la jante.

Partant de cet état de fait, la demanderesse a mené des recherches sur un dispositif de montage d'un boîtier de détection obviant aux inconvénients de l'art antérieur.

Ainsi, un objectif de ces recherches est de proposer un montage où le joint d'étanchéité entre la valve et la jante est moins soumis aux efforts tangentiels et radiaux dus à l'accélération, à la vitesse de rotation et à la masse du montage et du boîtier.

Un autre objet des recherches est de proposer un montage dans lequel tout en autorisant sa dilatation et sa compression, le joint est moins soumis aux efforts de serrage,

Un autre objet des recherches est de fournir un montage difficilement démontable de l'extérieur (fonction antivandalisme),

Un autre objet des recherches est de fournir un montage s'adaptant à des jantes d'autres véhicules que des quatre roues.

Ces recherches ont abouti à la conception d'un montage pour un boîtier de détection à l'intérieur d'un pneumatique du type de celui venant se fixer au corps d'une valve et comprenant les éléments suivants :
- un boîtier de détection accueillant des composants de détection,
- un corps de valve,
- un moyen d'étanchéité de type joint venant assurer l'étanchéité entre le corps de valve et la jante,
- un moyen de maintien en position du corps de valve sur la jante laquelle est préformée d'un orifice de liaison prévu à cet effet, ledit moyen de maintien étant séparé dudit boitier de detection
- un module de liaison du boîtier de détection avec le corps de valve. Ce montage est remarquable en ce qu'au moins un des éléments dudit montage, en dehors du moyen d'étanchéité, est préformé de façon à ce qu'une partie de cet élément vienne pénétrer dans l'orifice de liaison afin d'y prendre appui lorsque le montage est soumis à des contraintes tangentielles,
ledit corps de valve comprenant un épaulement extérieur sur lequel vient s'appuyer ledit joint, le moyen de maintien en position de la valve étant placé à l'intérieur et venant s'appuyer sur la surface interne de la jante, pour maintenir le joint serré entre l'orifice et le corps de valve.

Cette caractéristique répond aux objectifs de l'invention en proposant une butée mécanique prenant en charge les efforts tangentiels. En conséquence, le joint n'est plus soumis à la totalité des contraintes dues à la masse du montage et à la vitesse et aux accélérations qui sont reportées sur ces derniers. Cette prise en compte des efforts tangentiels peut être réalisée par tout élément du montage à l'exception bien entendu du joint qui est l'élément qui, de par sa fonction, doit être préservé. Selon les configurations, le moyen de maintien en position et le module de liaison peuvent être mis en oeuvre par un seul et même sous-ensemble.

Le fait que le moyen de maintien en position soit à l'intérieur de la jante rend très difficile un démontage malintentionné de la valve.

Selon une caractéristique préférentielle, ledit moyen d'étanchéité vient prendre appui sur la surface extérieure de la jante. Cette disposition du joint à l'extérieur de la jante présente plusieurs avantages, parmi ceux-ci :
- elle évite que ce dernier ne soit soumis directement aux conditions de température présentes dans le pneumatique,
- elle permet de lui faire bénéficier de la surface de l'extérieur de la jante qui offre, une meilleure planéité que celle définie par les surfaces internes de la jante,
- elle permet, lorsque l'orifice de traversée de la valve se situe sur une surface de la jante quasi parallèle à la bande roulante de la roue, d'exploiter les effets de la force centrifuge sur le joint qui tendent à mieux presser le joint dans les zones pour lesquelles il doit assurer l'étanchéité.

Le moyen de maintien en position peut être constitué par un écrou, par une fixation "quart de tour", par un clipsage, par un sertissage, par un rivetage, etc... En outre, l'épaulement va protéger le joint.

Préférentiellement, ledit moyen de maintien en position est constitué par une liaison filetée entre le corps de valve et un écrou qui, venant s'appuyer sur la surface intérieure de la jante, maintient par rotation relative du corps fileté par rapport à l'écrou, le joint serré entre l'orifice et le corps de valve.

Selon une autre caractéristique particulièrement avantageuse de l'invention, ledit épaulement est préformé de façon à créer d'une part une surface d'appui axial contre la surface de la jante et venant s'opposer aux efforts de serrage et un volume d'accueil dans lequel peut se déformer le joint afin notamment de prendre en compte les montages sur diverses épaisseurs de jantes. Cette caractéristique a pour avantage d'éviter que l'effort de serrage réalisé pour la fixation du corps de valve n'endommage le joint. Ainsi, à partir d'un seuil de serrage le joint ne constitue plus un élément intercalaire dans le montage de fixation du corps de valve sur la jante puisque la surface d'appui vient alors en contact avec la jante.

Afin de diminuer, les contraintes auxquelles peut être soumis le montage de l'invention et d'une manière générale toute valve à laquelle vient se lier un boîtier de détection, la demanderesse a mené des recherches sur le boîtier afin notamment de l'alléger. Ces recherches ont abouti à la conception d'un boîtier ne nécessitant pas la présence d'une pâte polymère ce qui en réduit considérablement la masse.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, plusieurs modes de réalisation d'un montage conformes à l'invention.
La figure 1 est un dessin schématique d'une vue de face en coupe éclatée des éléments constitutifs d'un premier mode de réalisation d'un montage conforme à l'invention,
La figure 2 est un dessin schématique d'une vue de côté en coupe du montage illustrée en figure 1,
La figure 3a est un dessin schématique d'une vue extérieure de dessous d'un mode de réalisation du boîtier,
La figure 3b est un dessin schématique d'une vue de dessous du boîtier auquel a été retiré son couvercle,
La figure 4 est un dessin schématique d'une vue de face en coupe d'un deuxième mode de réalisation de montage conforme à l'invention.

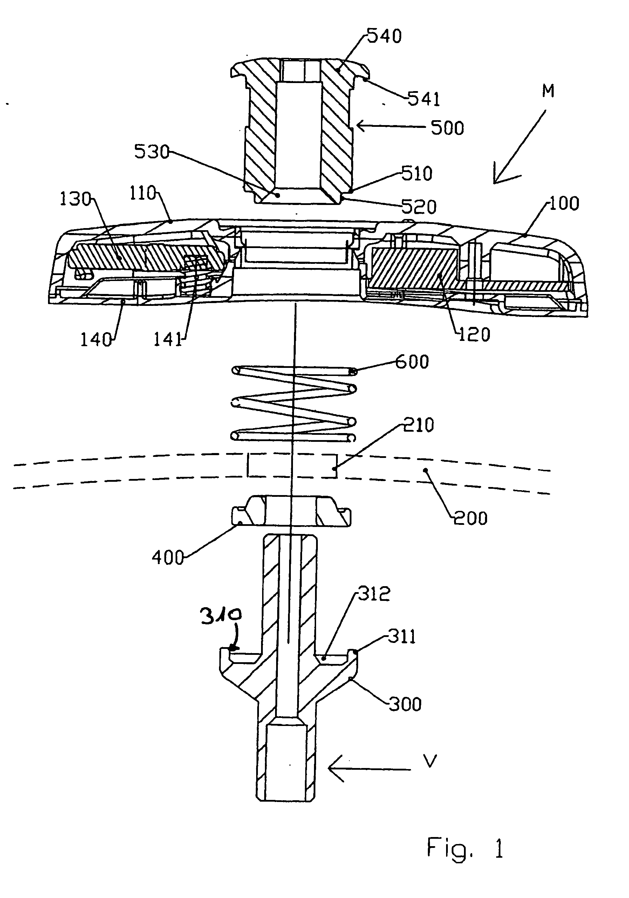

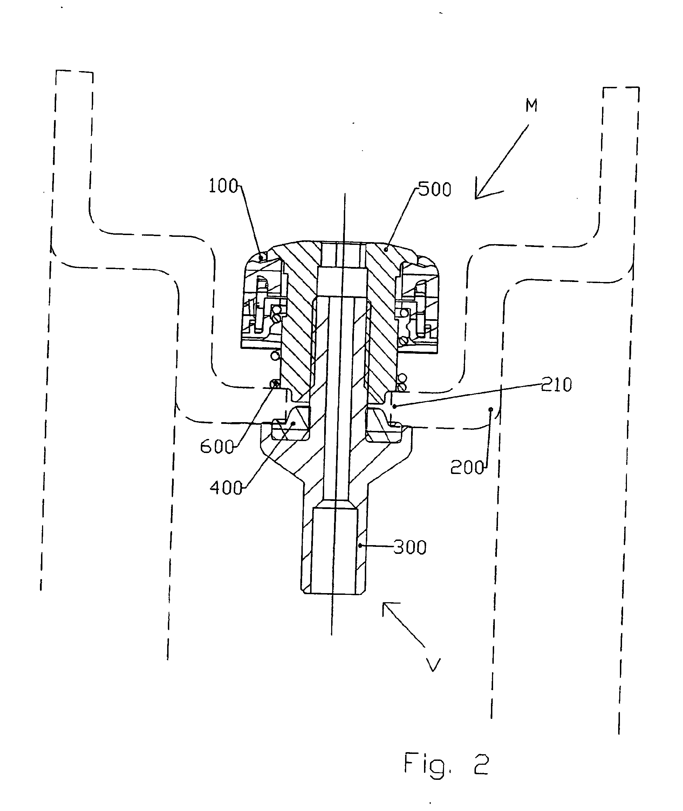

Tel qu'illustré sur le dessin des figures 1, 2 et 4, le montage référencé M dans son ensemble d'un boîtier de détection 100 sur une jante référencée 200 et représentée en traits interrompus courts est du type de celui venant se fixer au corps 300 d'une valve référencée V.

Ce montage M comprend les éléments suivants :
- un boîtier de détection 100 accueillant des composants de détection et les éléments nécessaires à leur fonctionnement,
- un corps de valve 300,
- un moyen d'étanchéité de type joint 400 venant assurer l'étanchéité entre le corps de valve 300 et la jante 200,
- un moyen de maintien en position 500 du corps de valve 300 sur la jante 200 laquelle est préformée d'un orifice 210 autorisant la traversée du corps de valve 300,
- un module de liaison qui est, selon le mode de réalisation illustré, confondu en partie avec le moyen de maintien en position 500, du boîtier de détection 100 avec le corps de valve 300.

Conformément à l'invention, le montage est remarquable en ce que le moyen 500 assurant d'une part le maintien en position du corps 300 et la liaison entre le corps 300 et le boîtier 100 d'autre part, est préformé de façon à ce qu'une partie de cet élément vienne pénétrer dans l'orifice 210 pratiqué dans la jante 200. Ainsi, lorsque la jante 200 est soumise à une grande vitesse de rotation ainsi qu'à de grandes accélérations, cette partie d'élément vient en contact avec la surface cylindrique de l'orifice 210 et prend en compte les contraintes tangentielles en lieu et place du joint 400. Cette pénétration cylindrique pouvant présenter un ajustement avec jeu permet de centrer le montage par rapport à l'axe de l'orifice 210.

Ledit corps de valve 300 comprend un épaulement extérieur 310 sur lequel vient s'appuyer ledit joint 400 qui vient s'intercaler au niveau de l'orifice 210 entre la jante 200 et le corps de valve 300. Le moyen de maintien en position 500 du corps 300 de la valve V est constitué par une liaison filetée formant écrou qui, venant s'appuyer sur la surface interne de la jante 200, maintient par rotation relative de la tige filetée formée par le corps de valve 300 par rapport à l'écrou 500, le joint 400 serré entre l'orifice 210 et le corps de valve 300.

Selon un choix technologique particulièrement judicieux, la partie basse de l'élément 500 formant écrou est préformée non seulement pour présenter une surface d'appui axial 510 pour assurer le maintien en position du corps 300 sur lequel il se visse, mais également pour présenter une surface d'appui radiale 520 venant réaliser une pénétration cylindrique à l'intérieur de l'orifice 210. Comme illustrée, cette pénétration cylindrique ne dépasse pas l'épaisseur de la jante 200 afin de laisser un volume libre à l'intérieur du cylindre défini par l'orifice 210 pour la dilatation du joint. La longueur de cette pénétration est prévue pour s'adapter à toute épaisseur de jante.

En outre, l'extrémité de l'élément 500 venant s'introduire dans l'orifice est préformée d'un volume libre d'accueil 530 dans lequel peut se dilater le joint 400. Pour ce faire, selon le mode de réalisation illustré, l'extrémité de l'élément venant pénétrer dans l'orifice 210 pratiqué dans la jante est chanfreinée au niveau de son orifice intérieur.

De plus, ledit épaulement 310 défini extérieurement par le corps de valve 300 est préformé de façon à créer d'une part une surface d'appui axial 311 contre la surface de la jante 200 et venant s'opposer aux efforts de serrage et un volume d'accueil 312 dans lequel peut se dilater le joint 400.

Selon la solution de liaison illustrée et conformément à l'invention, le module de liaison du boîtier 100 avec le corps de valve 300 se confond en partie avec le moyen de maintien en position 500. Aussi, le manchon fileté 500 qui assure ces deux fonctions traverse ledit boîtier 100 et comprend avantageusement une tête 540 avec un épaulement 541 servant d'appui audit boîtier 100. Ce manchon est fileté pour venir se visser sur la tige filetée formée par le corps de valve 300. Ce manchon 500 est préformé au niveau de la partie haute de sa tête 540 pour autoriser à partir de l'intérieur de la jante, sa rotation par un outil. Selon un mode de réalisation préféré, cette préformation consiste en un évidement reprenant un profil à six pans pour autoriser son actionnement par l'utilisation d'une clé correspondante. Le corps de valve 300 est lui vierge de toute surface susceptible de faciliter sa mise en rotation.

En outre, le module de liaison du montage M comprend également un moyen élastique 600 tendant à maintenir le boîtier 100 en appui contre la tête 540 en venant s'intercaler entre la surface intérieure de la jante 200 et la partie basse du boîtier 100. La présence de ce moyen élastique 600 mis en oeuvre dans le mode de réalisation illustré par un ressort présente plusieurs avantages, parmi ceux-ci :
- en adéquation avec une longueur adaptée du manchon fileté 500, il maintient le boîtier 100 dans une position écartée de la surface intérieure de la jante garantissant un volume d'air intercalé servant d'isolant thermique qui favorise un bon fonctionnement des moyens de détection,
- il maintient en position le boîtier contre la tête de positionnement du moyen de liaison afin d'éviter toute vibration ou déplacement dus au jeu nécessaire de montage,
- il autorise le déplacement en position basse du boîtier contre la surface intérieure de la jante, déplacement nécessaire lors du montage du pneumatique sur la jante,
- il évite le desserrage du moyen de maintien,
- enfin, il assure ces fonctions malgré les variations des côtes susceptibles de changer en fonction du type de jante.

Il est important de noter que dans le montage tel que proposé dans ce mode de réalisation, la fixation du corps de valve 300 sur la jante 200 ne fait pas intervenir dans son empilement d'éléments souples ou déformables. En effet, la rotation du manchon fileté 500 a pour conséquence l'appui de sa partie basse contre la surface intérieure de la jante 200 et l'appui de l'épaulement 310 décrit plus haut du corps de valve 300 contre la surface extérieure de la jante 200. Ainsi, le montage de l'invention permet d'optimiser la fixation en la rigidifiant tout en profitant de l'élasticité fonctionnelle de certains de ces éléments.

Selon une caractéristique non illustrée, afin d'éviter une rotation ou un débattement angulaire du boîtier 100 par rapport au manchon fileté qui le traverse ladite tête 540 est préformée au niveau de sa surface 541 en contact avec le boîtier 100 de façon à proposer une partie crantée coopérant avec des crans réalisés dans le boîtier 100 de façon à limiter en association avec le moyen élastique 100, les mouvements de rotation du boîtier par rapport audit manchon. Ce "crantage" a pour autre fonction d'éviter une rotation ou un débattement angulaire du manchon fileté par rapport au boîtier.

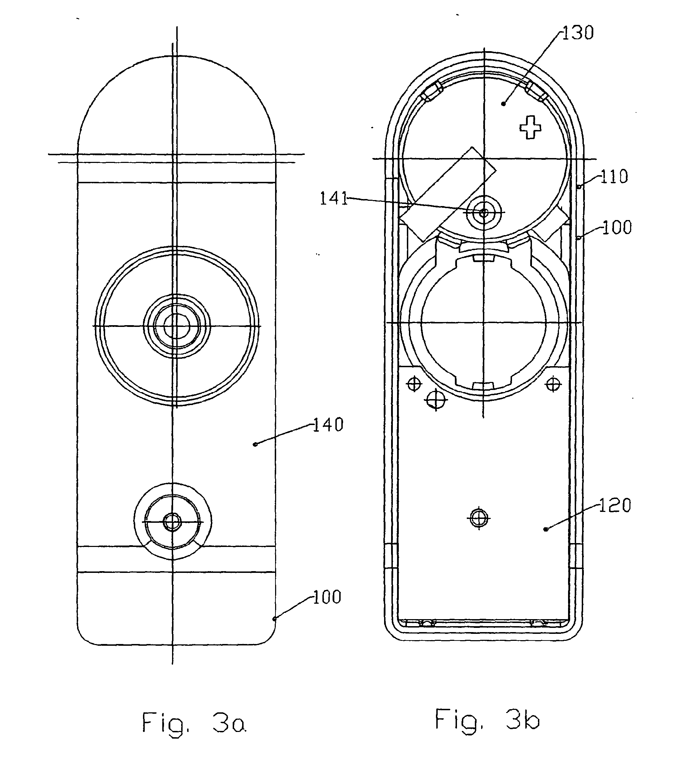

Comme illustré sur le dessin des figures 3a et 3b, ledit boîtier 100 est constitué par un réceptacle 110 dans lequel sont positionnés les capteurs 120 et les différents éléments nécessaires à leur fonctionnement dont une pile 130 et par un couvercle 140 venant fermer ledit réceptacle 110. Selon le mode de réalisation illustré, le couvercle comprend des moyens de maintien en position des éléments 120 et 130 dans ledit réceptacle 110.

Selon un mode de réalisation préféré, ces moyens de maintien en position sont constitués par notamment un moyen élastique modélisé et référencé 141 qui, lorsque le couvercle vient se fixer, ici par vissage au réceptacle 110, maintient en position la pile ou batterie dans son logement. En effet, ledit réceptacle est préformé pour définir des zones d'accueils et de positionnement des différentes éléments qu'il accueille.

Selon une autre caractéristique le matériau utilisé pour le réceptacle et pour le couvercle ainsi que les côtes de fabrication de ces deux éléments permettent de réaliser une liaison quasi étanche entre eux.

Ce confinement associé aux moyens de maintien en position présente de nombreux avantages parmi ceux-ci :
- il évite de noyer les éléments du réceptacle dans une pâte polymère et permet un gain de poids conséquent diminuant grandement les contraintes auquel est soumis le montage de fixation de l'invention,
- l'absence de pâte polymère autorise la réparation ainsi que le recyclage du boîtier,
- l'absence de pâte polymère permet de mieux exploiter la technologie de la radiofréquence qui est classiquement utilisée pour la transmission des paramètres mesurés de la roue vers le sous-ensemble de réception et de traitement.

La conception des moyens d'accueil et de maintien en position de la batterie ou pile 130 a fait l'objet d'un soin particulier par la demanderesse. En effet, les batteries plates et rondes doivent éviter que leur pôle négatif soit soumis à compression ou stressé pour proposer une bonne autonomie.

Ainsi, selon une caractéristique particulièrement avantageuse, le moyen d'accueil de la batterie comprend au moins deux butées, définies par exemple par deux plans inclinés, sur lesquelles vient s'appuyer une arête circulaire de la structure cylindrique formant classiquement le pôle positif d'une telle batterie. La prise d'appui sur la seule structure "positive" de la pile évite tout effort de pression sur la partie définissant le pôle négatif. En adéquation avec cette caractéristique, le moyen élastique de positionnement vient prendre appui également sur la structure définissant le pole positif de la batterie en opposition avec les appuis défini les plans inclinés.

Selon une autre caractéristique particulièrement avantageuse, le moyen d'accueil de la batterie comprend au moins un "V" de positionnement sur les deux branches duquel vient se positionner les deux arêtes circulaires de la structure cylindrique formant classiquement le pôle positif d'une telle batterie.

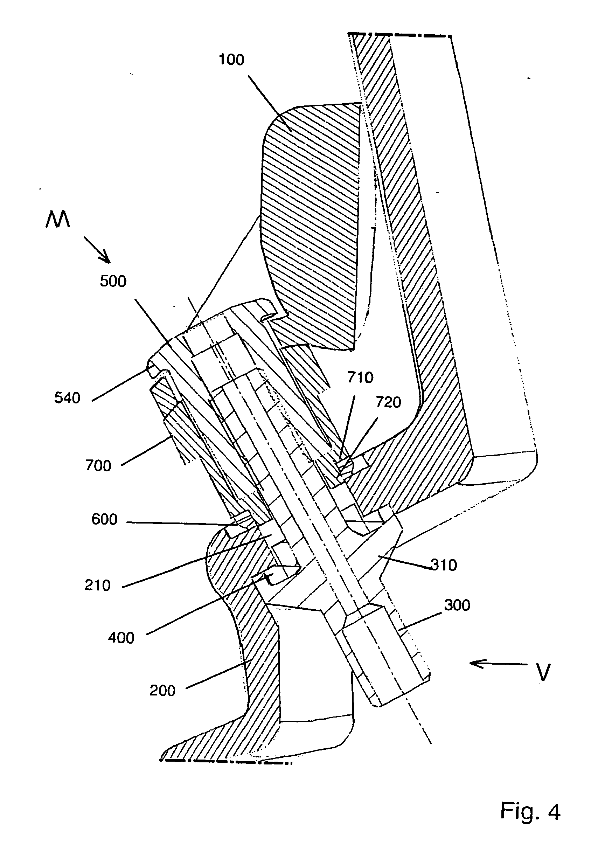

Le mode de réalisation illustré par le dessin de la figure 4, présente un montage qui adopte les caractéristiques de l'invention tout en les adaptant à une application où la valve ne peut être intégrée dans la jante 200 que par le côté de celle-ci.

Conformément à l'invention, ce montage comprend :
- un boîtier de détection 100 accueillant des composants de détection et les éléments nécessaires à leur fonctionnement,
- un corps de valve 300,
- un moyen d'étanchéité de type joint 400 venant assurer l'étanchéité entre le corps de valve 300 et la jante 200,
- un moyen de maintien en position 500 du corps de valve 300 sur la jante 200 laquelle est préformée d'un orifice 210 autorisant l'insertion du corps de valve,
- un module de liaison, ici aussi confondu en partie avec le moyen de maintien en position 500, du boîtier de détection 100 avec le corps de valve 300.

Conformément à l'invention, le montage est remarquable en ce qu'un des éléments du montage en dehors du joint est préformé de façon à ce qu'une partie de cet élément vienne pénétrer dans l'orifice 210 pratiqué dans la jante 200.

Cet élément est ici constitué par un sous-ensemble 700 du module de liaison qui vient servir de pièce intercalaire entre un moyen élastique 600 faisant partie du module de liaison et appuyé sur la surface intérieure de la jante et le boîtier qui vient prendre appui contre la tête 540 du manchon fileté 500 assurant le maintien en position du corps de valve 300. La partie basse de cette pièce intercalaire 700 comporte un épaulement lui permettant de présenter une surface d'appui axial 710 au moyen élastique 600, qui est ici une rondelle élastique, et une surface d'appui cylindrique radiale 720 pénétrant dans l'orifice 210

Cette intégration différente du corps de valve requiert une liaison différente entre le corps de valve 300 et le boîtier 100. Ainsi, le moyen de liaison ne traverse pas le boîtier 100 au niveau de son plan de symétrie mais est lié à ce dernier au moyen d'une platine saillant de son côté et traversé par le manchon fileté 500.

En outre, dans ce mode de réalisation, les surfaces du manchon et du boîtier venant en contact sont préformées pour former une surface d'appui arrondie pour permettre au boîtier de venir par glissement dans tous les cas de figure s'appuyer contre la surface intérieure de la jante 200.

Il en est de même pour les surfaces d'appui entre le boîtier et la pièce intercalaire 700 emmanchée sur la tige formée par le corps de valve 300.

Selon une caractéristique particulièrement avantageuse, les arrondis formés par les dites surfaces d'appui sont légèrement excentrées afin de proposer un positionnement selon deux dimensions du boîtier.

On comprend que le montage, qui vient d'être ci-dessus décrit et représenté, l'a été en vue d'une divulgation plutôt que d'une limitation. Bien entendu, divers aménagements, modifications et améliorations pourront être apportés à l'exemple ci-dessus, sans pour autant sortir du cadre de l'invention telle que définie dans les revendications.

Ainsi, par exemple, l'élément du montage dont une partie vient pénétrer dans l'orifice de la jante peut être constitué par le corps de valve lui-même dont un changement de diamètre peut assurer la prise en compte desdites efforts tangentiels.

## Revendications

1. Montage (M) d'un boîtier de détection (100) à l'intérieur d'un pneumatique du type de celui venant se fixer au corps (300) d'une valve (V) et comprenant les éléments suivants :
- un boîtier de détection (100) accueillant des composants de détection,
- un corps de valve (300),
- un moyen d'étanchéité de type joint (400) venant assurer l'étanchéité entre le corps de valve (300) et la jante (200),
- un moyen de maintien (500) en position du corps de valve (300) sur la jante (200) laquelle est préformée d'un orifice de liaison (210) prévu à cet effet, ledit moyen de maintien étant séparé dudit boîtier de détection,
- un module de liaison du boîtier de détection (100) avec le corps de valve (300),
**CARACTÉRISÉ PAR LE FAIT QU'**au moins un des éléments (500) dudit montage, en dehors du moyen d'étanchéité (400), est préformé de façon à ce qu'une partie de cet élément (500) vienne pénétrer dans l'orifice (210) de liaison afin d'y prendre appui lorsque le montage est soumis à des contraintes tangentielles, ledit corps de valve (300) comprenant un épaulement extérieur (310) sur lequel vient s'appuyer ledit joint (400), le moyen de maintien en position (500) de la valve (V) étant placé à l'intérieur et venant s'appuyer sur la surface interne de la jante (200), pour maintenir le joint (400) serré entre l'orifice (210) et le corps de valve (300).

2. Montage (M) selon la revendication 1, **CARACTÉRISÉ PAR LE FAIT QUE** ledit moyen d'étanchéité (400) vient prendre appui sur la surface extérieure de la jante (200).

3. Montage selon la revendication 1, **CARACTÉRISÉ PAR LE FAIT QUE** ledit moyen de maintien en position (500) est constitué par une liaison filetée entre le corps de valve (300) et un écrou qui, en venant s'appuyer sur la surface intérieure de la jante (200), maintient par rotation relative du corps fileté (300) par rapport à l'écrou (500), le joint (400) serré entre l'orifice (210) et le corps de valve (300).

4. Montage (M) selon la revendication 1, **CARACTÉRISÉ PAR LE FAIT QUE** ledit épaulement (310) est préformé de façon à créer d'une part une surface d'appui axial (311) contre la surface de la jante (200) et venant s'opposer aux efforts de serrage et un volume d'accueil (312) dans lequel peut se déformer le joint (400).

5. Montage (M) selon la revendication 1, **CARACTÉRISÉ PAR LE FAIT QUE** le module de liaison du boîtier (100) avec le corps de valve (300) comprend, venant s'emmancher sur le corps de valve (300), un manchon (500) dont la partie basse est préformée non seulement pour présenter une surface d'appui axial (510) pour assurer le maintien en position du corps (300) sur lequel il se visse, mais également pour présenter une surface d'appui radiale (520) venant réaliser une pénétration cylindrique à l'intérieur de l'orifice (210).

6. Montage (M) selon la revendication 5, **CARACTÉRISÉ PAR LE FAIT QUE** ledit manchon (500) comprend une tête (540) avec un épaulement (541) servant d'appui audit boîtier (100).

7. Montage (M) selon la revendication 5, **CARACTÉRISÉ PAR LE FAIT QUE** ledit manchon (500) est fileté pour venir se visser sur le corps de valve (300).

8. Montage (M) selon la revendication 6, **CARACTÉRISÉ PAR LE FAIT QU'**il comprend un moyen élastique (600) tendant à maintenir le boîtier (100) en appui contre la tête (540).

9. Montage (M) selon la revendication 4, **CARACTÉRISÉ PAR LE FAIT QUE** ladite tête (540) est préformée au niveau de sa surface (541) en contact avec le boîtier (100) pour proposer une partie crantée coopérant avec des crans réalisés dans le boîtier (100) de façon à limiter les mouvements de rotation du boîtier (100) par rapport audit manchon (500).

10. Montage (M) selon la revendication 1, **CARACTÉRISÉ PAR LE FAIT QUE** ledit boîtier (100) est constitué par un réceptacle (110) dans lequel sont positionnés les capteurs (120) et les différents éléments (130) nécessaires à leur fonctionnement et par un couvercle (140) venant fermer ledit réceptacle (110).

11. Montage (M) selon la revendication 5, **CARACTÉRISÉ PAR LE FAIT QUE** l'extrémité de l'élément (500) venant pénétrer dans l'orifice (210) pratiqué dans la jante (200), est chanfreinée (530) au niveau de son orifice intérieur.

12. Montage (M) selon la revendication 5, **CARACTÉRISÉ PAR LE FAIT QUE** les surfaces du manchon (500) et du boîtier (100) venant en contact sont préformées pour former une surface d'appui arrondie pour permettre au boîtier (100) de venir s'appuyer contre la surface intérieure de la jante (200).

## Claims

1. Assembly (M) of a detection unit (100) inside a tyre attached to the body (300) of a valve (V) and including the following elements:
- a detection unit (100) receiving detection components,
- a valve body (300),
- sealing means (400) for providing a seal between the valve body (300) and the rim (200),
- means (500) for holding the valve body (300) in position on the rim (200) which is preformed with a connection aperture (210) provided for this purpose, said holding means being separated from said detection unit,
- a module for connecting the detection unit (100) to the valve body (300),
**CHARACTERISED IN THAT** at least one of the elements (500) of said assembly, aside from the sealing means (400), is preformed so that a portion of this element (500) penetrates the connection aperture (210) so as to engage it when the assembly is subjected to tangential stresses, said valve body (300) includes an external shoulder (310) with which said seal (400) comes into contact, with the valve (V) position holding means (500) being placed inside and coming into contact with the internal surface of the rim (200), in order to hold the seal (400) securely between the aperture (210) and the valve body (300).

2. Assembly (M) according to claim 1, **CHARACTERISED IN THAT** said sealing means (400) come into contact with the external surface of the rim (200).

3. Assembly according to claim 1, **CHARACTERISED IN THAT** said position holding means (500) consist of a threaded connection between the valve body (300) and a nut that, coming into contact with the internal surface of the rim (200), holds, by means of a relative rotation of the threaded body (300) with respect to the nut (500), the seal (400) securely between the aperture (210) and the valve body (300).

4. Assembly (M) according to claim 1, **CHARACTERISED IN THAT** said shoulder (310) is preformed so as to create a surface (311) for axial contact with the surface of the rim (200) and opposing the screwing forces, and a receiving space (312) in which the seal (400) can be deformed.

5. Assembly (M) according to claim 1, **CHARACTERISED IN THAT** the module for connecting the unit (100) to the valve body (300) includes a sleeve (500) which engages the valve body (300), which sleeve has a low portion that is preformed not only to have an axial contact surface (510) for holding the body (300) on which it is screwed in position, but also to have a radial contact surface (520) which performs a cylindrical penetration in the aperture (210).

6. Assembly (M) according to claim 5, **CHARACTERISED IN THAT** said sleeve (500) includes a head (540) with a shoulder (541) which acts as a contact surface for said unit (100).

7. Assembly (M) according to claim 5, **CHARACTERISED IN THAT** said sleeve (500) is threaded so as to be screwed on the valve body (300).

8. Assembly (M) according to claim 6, **CHARACTERISED IN THAT** it includes resilient means (600) that tend to hold the unit (100) in contact with the head (540).

9. Assembly (M) according to claim 4, **CHARACTERISED IN THAT** said head (540) is preformed at the level of its surface (541) in contact with the unit (100) to provide a corrugated portion cooperating with notches provided in the unit (100) so as to limit the rotational movements of the unit (100) with respect to said sleeve (500).

10. Assembly (M) according to claim 1, **CHARACTERISED IN THAT** said unit (100) consists of a receptacle (110) in which the sensors (120) and the various elements (130) necessary for their operation are positioned, and a cover (140) closing said receptacle (110).

11. Assembly (M) according to claim 5, **CHARACTERISED IN THAT** the end of the element (500) penetrating the aperture (210) provided in the rim (200) is chamfered (530) at the level of its internal aperture.

12. Assembly (M) according to claim 5, **CHARACTERISED IN THAT** the surfaces of the sleeve (500) and the unit (100) coming into contact are preformed so as to form a curved contact surface to enable the unit (100) to come into contact with the internal surface of the rim (200).

## Patentansprüche

1. Anbringung (M) einer Sensoreinheit (100) im Inneren eines Reifens der Art, die an den Körper (300) eines Ventils (V) befestigt wird, und umfassend die folgenden Elemente:
- eine Sensoreinheit (100), die Sensorkomponenten aufnimmt,
- einen Ventilkörper (300),
- ein Dichtungsmittel vom Typ Dichtung (400), das die Dichtigkeit zwischen dem Ventilkörper (300) und der Felge (200) sicherstellt,
- ein Mittel zum Halten (500) der Position des Ventilkörpers (300) auf der Felge (200), die mit einer Verbindungsöffnung (210), vorgesehen zu diesem Zweck, vorgeformt ist, wobei das Haltemittel von der Sensoreinheit getrennt ist,
- ein Modul zur Verbindung der Sensoreinheit (100) mit dem Ventilkörper (300),
**dadurch gekennzeichnet, dass** mindestens eines der Elemente (500) der Anbringung, außer dem Dichtungsmittel (400) so vorgeformt ist, dass ein Teil dieses Elements (500) in die Verbindungsöffnung (210) eindringt, um dort aufzuliegen, wenn die Anbringung Schubspannungen unterzogen wird, wobei der Ventilkörper (300) einen äußeren Absatz (310) umfasst, auf dem die Dichtung (400) aufliegt, wobei das Mittel zum Halten der Position (500) des Ventils (V) im Inneren angebracht ist und auf der Innenfläche der Felge (200) aufliegt, um die Dichtung (400) zwischen der Öffnung (210) und dem Ventilkörper (300) eingeklemmt zu halten.

2. Anbringung (M) nach Anspruch 1, **dadurch gekennzeichnet, dass** das Dichtungsmittel (400) auf der Außenfläche der Felge (200) aufliegt.

3. Anbringung nach Anspruch 1, **dadurch gekennzeichnet, dass** das Mittel zum Halten der Position (500) aus einer Gewindeverbindung zwischen dem Ventilkörper (300) und einer Schraubenmutter besteht, die, indem sie auf der Innenfläche der Felge (200) aufliegt, durch eine relative Drehung des Ventilkörpers (300) bezüglich der Schraubenmutter (500) die Dichtung (400) zwischen der Öffnung (210) und dem Ventilkörper (300) eingeklemmt hält.

4. Anbringung (M) nach Anspruch 1, **dadurch gekennzeichnet, dass** der Vorsprung (310) so vorgeformt ist, dass er einerseits eine Fläche zur axialen Auflage (311) gegen die Fläche der Felge (200) bildet und sich den Klemmkräften entgegensetzt und ein Aufnahmevolumen (312), in dem die Dichtung (400) verformt werden kann.

5. Anbringung (M) nach Anspruch 1, **dadurch gekennzeichnet, dass** das Modul zur Verbindung der Einheit (100) mit dem Ventilkörper (300) eine Muffe (500) umfasst, die auf den Ventilkörper (300) gesteckt ist, deren unterer Teil nicht nur vorgeformt ist, um eine axiale Auflagefläche (510) aufzuweisen, um das Halten in Position des Körpers (300), auf den er geschraubt wird, sicherzustellen, sondern auch, um eine radiale Auflagefläche (520) aufzuweisen, die eine zylindrische Eindringung in das Innere de Öffnung (210) durchführt.

6. Anbringung (M) nach Anspruch 5, **dadurch gekennzeichnet, dass** die Muffe (500) einen Kopf (540) mit einem Absatz (541) umfasst, der als Auflage für die Einheit (100) dient.

7. Anbringung (M) nach Anspruch 5, **dadurch gekennzeichnet, dass** die Muffe (500) gewindegeschnitten ist, um auf den Ventilkörper (300) geschraubt zu werden.

8. Anbringung (M) nach Anspruch 6, **dadurch gekennzeichnet, dass** sie ein elastisches Mittel (600) umfasst, das dazu neigt, die Einheit (100) gegen den Kopf (540) aufliegen zu lassen.

9. Anbringung (M) nach Anspruch 4, **dadurch gekennzeichnet, dass** der Kopf (540) auf der Ebene seiner Fläche (541), in Kontakt mit der Einheit (100), vorgeformt ist, um einen gerändelten Teil zu bilden, der mit den Rändelungen zusammenarbeitet, die in der Einheit (100) durchgeführt sind, um die Drehbewegungen der Einheit (100) bezüglich der Muffe (500) zu begrenzen.

10. Anbringung (M) nach Anspruch 1, **dadurch gekennzeichnet, dass** die Einheit (100) aus einem Behälter (110) besteht, in dem die Sensoren (120) und die verschiedenen Elemente (130) angeordnet sind, die zu ihrer Funktion erforderlich sind, und aus einem Deckel (140), der den Behälter (110) schließt.

11. Anbringung (M) nach Anspruch 5, **dadurch gekennzeichnet, dass** das Ende des Elements (500), das in die Öffnung (210) eindringt, die in der Felge (200) durchgeführt ist, auf der Ebene seiner unteren Öffnung abgeschrägt (530) ist.

12. Anbringung (M) nach Anspruch 5, **dadurch gekennzeichnet, dass** die Oberflächen der Muffe (500) und der Einheit (100), die miteinander in Kontakt stehen, vorgeformt sind, um eine abgerundete Auflagefläche zu bilden, um der Einheit (100) zu ermöglichen, gegen die Innenfläche der Felge (200) aufzuliegen.
